# EUROPEAN PATENT SPECIFICATION

(11) **EP 3 377 463 B1**
(45) Date of publication and mention of the grant of the patent: **04.08.2021**
(21) Application number: 16867409.1
(22) Date of filing: 15.11.2016
(51) Int. Cl.: C06B 23/00, C06D 5/06

(54) **ADDITIVE FOR SOLID ROCKET MOTOR HAVING PERCHLORATE OXIDIZER**
ADDITIV FÜR FESTSTOFFRAKETENMOTOR MIT PERCHLORATOXIDATIONSMITTEL
ADDITIF POUR MOTEUR-FUSÉE SOLIDE AYANT UN OXYDANT PERCHLORATÉ

(30) Priority: 18.11.2015 US 201562257071 P
(43) Date of publication of application: 26.09.2018
(73) Proprietor: Aerojet Rocketdyne, Inc., Sacramento, CA 95813-6000 (US)
(72) Inventor: DAWLEY, Scott K., Sacramento, California 95813-6000 (US); DOLL, Daniel, Sacramento, California 95813-6000 (US)
(74) Representative: Dehns
(86) International application number: PCT/US2016/061966
(87) International publication number: WO 2017/131840

(56) References cited:
- WO-A2-2005/028842
- US-A- 3 172 793
- US-A- 3 175 979
- US-A- 3 846 195
- US-A- 4 023 995
- US-A- 4 391 660
- US-A1- 2003 041 935
- US-A1- 2004 200 553
- US-A1- 2010 251 694
- US-B1- 8 025 010

## Description

### BACKGROUND

Solid rocket motors typically include a cast solid propellant. Solid propellant may include oxidizer, fuel, or both, held together with a binder. Ignition of the solid propellant generates high pressure gas, which is expelled through a nozzle to generate thrust. US 2010/251694 A1 discloses a solid propellant comprising an oxidizer, a binder, a metal, an inorganic oxidizer and an additional fuel. US 2003/041935 A1 discloses a solid propellant comprising hydroxyl-terminated polybutadiene, aluminium, ammonium perchlorate and 0.5% of silicon dioxide.

### SUMMARY

A solid rocket motor according to claim 1 includes a fuel, a binder, a perchlorate oxidizer that is thermally decomposable to perchlorate decomposition products, and a salt compound that is reactive with one or more of the perchlorate decomposition products.

The salt compound is a metal salt wherein the metal is cobalt; or a boron based salt; or a combination thereof.

In a further embodiment of any of the foregoing embodiments, the salt compound is the metal salt.

In a further embodiment of any of the foregoing embodiments, the metal of the metal salt is thermodynamically favored to react spontaneously with one or more of the perchlorate decomposition products.

The metal of the metal salt is cobalt.

In a further embodiment of any of the foregoing embodiments, the salt compound is a boron-based salt.

The salt compound is 0.1% to 20% of a total combined weight of the fuel, the binder, the perchlorate oxidizer, and the salt compound.

In a further embodiment of any of the foregoing embodiments, the salt compound is 1% to 10% of the total combined weight.

In a further embodiment of any of the foregoing embodiments, the salt compound is 1% to 5% of the total combined weight.

The salt compound is selected from the group consisting of metal salts wherein the metal is cobalt or boron-based salts, and combinations thereof. The binder is hydroxyl-terminated polybutadiene, the perchlorate oxidizer includes at least one of ammonium perchlorate, sodium perchlorate, or potassium perchlorate. The fuel includes at least one of aluminum, magnesium, or boron-based salts. The salt compound is 0.1% to 20% of a total combined weight of the fuel, the binder, the perchlorate oxidizer, and the salt compound.

A method for testing stability of a solid rocket motor according to claim 1 includes gradually increasing an environment temperature around a solid rocket motor according to claim 1. At least one of the following are measured: i) the environment temperature at which the solid rocket motor burns, explodes, or detonates or ii) a time period at which the solid rocket motor burns, explodes, or detonates from the gradual increasing of the environment temperature.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example solid rocket motor.
Figure 2 illustrates an example solid propellant.
Figure 3 depicts an example method of testing a rocket motor.

### DETAILED DESCRIPTION

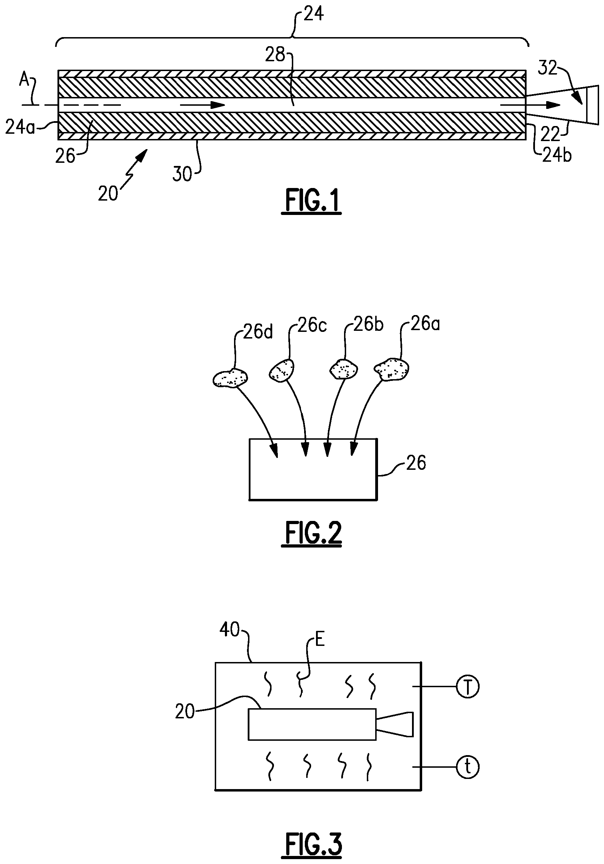

Figure 1 illustrates a cross-section of selected portions of an example solid rocket motor 20, which is also an example of an energetic device. The solid rocket motor 20 generally includes a nozzle 22 and a solid propellant section 24. The solid propellant section 24 includes a forward end 24a and an aft end 24b. The nozzle 22 is attached at the aft end 24b. As will be appreciated, the solid rocket motor 20 may include additional components related to the operation thereof, which are generally known and thus not described herein.

The solid propellant section 24 includes a solid propellant 26. Solid propellants may include at least a polymer-based binder and an oxidizer. Depending on the requirements of a particular design, a solid propellant may also include a solid fuel. In this example, the solid propellant 26 defines an elongated bore 28. The geometry of the bore 28 may be cylindrical and may have radial fin slots or other features. Alternatively, the solid propellant 26 may not have a bore. The solid propellant 26 is disposed within a motor case 30 about a central axis A.

Upon ignition the solid propellant 26 reacts to produce high temperature and high pressure gas (combustion gas). The combustion gas flows down the bore 28 and discharges through the nozzle 22 to produce thrust.

Prior to use for producing thrust, a motor may be in storage or may be transported. During storage or transport the motor may be subject to the ambient surrounding environmental conditions, which may include a wide range of temperature. In particular, elevated temperatures may cause thermal decomposition of constituents of a solid propellant. As an example, perchlorate oxidizers thermally decompose into gaseous ammonia and gaseous perchlorate decomposition products. The gaseous products increase the potential for foaming of the solid propellant, which in turn may increase surface area that is available for further reactions.

One characterization of the potential for this phenomenon to occur is thermal stability. Thermal stability of rocket motors is measured by "cook-off' testing. The testing involves increasing the environmental temperature around a rocket motor until the motor burns, explodes or detonates. The temperature at which the motor burns, explodes, or detonates is one measure of the stability. Additionally or alternatively, another measure of stability is the time period at which the motor burns, explodes, or detonates due to the gradual increasing of the environment temperature. Such testing is generally known and is documented in known standards.

The solid propellant 26 disclosed herein includes a composition that is formulated to enhance thermal stability. Namely, as will be described below, the composition includes an additive that is capable of sequestering one or more of the perchlorate decomposition products by spontaneously reacting with the perchlorate decomposition product to form a solid and thus reduce the potential for gaseous foaming. As an example, the additive is spontaneously reactive with ammonia compounds, perchlorate compounds, or both.

Figure 2 schematically illustrates the various constituents of the solid propellant 26. The solid propellant 26 includes a fuel 26a, a binder 26b, a perchlorate oxidizer 26c, and an additive 26d. For example, the additive 26d is thermodynamically favored to react spontaneously with one or more perchlorate decomposition products of the perchlorate oxidizer 26c. The spontaneity of reaction between the additive 26d and a perchlorate decomposition product can be characterized by the Gibbs free energy of the reaction. For instance, the Gibbs free energy of the reaction of the additive 26d and the perchlorate decomposition product is negative, as calculated by the difference between the change in enthalpy and the temperature multiplied by the change in entropy.

The additive 26d is a salt compound that is reactive with one or more perchlorate decomposition products. The salt compound is a metal salt wherein the metal is cobalt; or a boron-based salt; or a combination thereof. A boron-based salt may include a borate, borite, and perborate salt. The metal of the metal salt is thermodynamically favored to react spontaneously with one or more perchlorate decomposition products.

The amount of the additive 26d in the combined total weight of the fuel 26a, the binder 26b, the perchlorate oxidizer 26c, and the additive 26d may be varied to control thermal stability of the solid propellant 26. The salt compound is 0.1% to 20% of the total combined weight. In further examples, the salt compound is 1% to 10% or 1% to 5% of the total combined weight.

The binder 26b is hydroxyl-terminated polybutadiene, the perchlorate oxidizer 26c includes at least one of ammonium perchlorate, sodium perchlorate, or potassium perchlorate, the fuel 26a includes at least one of aluminum, magnesium, or boron-based salt, and the salt is 0.1% to 20% of the total combined weight.

Figure 3 depicts an example method for testing stability of the solid rocket motor 20. In this example, the solid rocket motor 20 is disposed in a chamber 40 that is operable to heat the environment around the motor 20, represented at E, at a controlled heating rate. The chamber 40 may include sensors, controllers, or other devices that are capable of measuring the temperature (indicated at "T") of the environment E and the time (indicated at "t") of the testing. The environment E is increased in temperature at a controlled heating rate around the solid rocket motor 20. The testing includes measuring at least one of the environment temperature at which the solid rocket motor 20 burns, explodes, or detonates, or a time period at which the motor 20 burns, explodes, or detonates due to the gradual increase of the environment temperature. The temperature, the time period, or both represent the thermal stability of the motor 20.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures.

## Claims

1. A solid rocket motor comprising a solid propellant, wherein the solid propellant comprises:
a fuel;
a binder;
a perchlorate oxidizer that is thermally decomposable to gaseous perchlorate decomposition products; and
a salt compound that is reactive with one or more of the gaseous perchlorate decomposition products; wherein
the fuel includes at least one of aluminum, magnesium, or boron-based salts;
the binder is hydroxyl-terminated polybutadiene;
the perchlorate oxidizer includes at least one of ammonium perchlorate, sodium perchlorate, and potassium perchlorate;
the salt compound includes at least one of:
a) a metal salt wherein the metal is cobalt; or
b) a boron-based salt that includes a borate, a borite, a perborate, or a combination thereof; and
the salt compound is 0.1% to 20% of a total combined weight of the fuel, the binder, the perchlorate oxidizer, and the salt compound.

2. The solid rocket motor as recited in claim 1, wherein the salt compound is a metal salt.

3. The solid rocket motor as recited in claim 1, wherein the salt compound is a boron-based salt.

4. The solid rocket motor as recited in claim 1, wherein the salt compound is 1% to 10% of the total combined weight.

5. The solid rocket motor as recited in claim 1, wherein the salt compound is 1% to 5% of the total combined weight.

6. A method for testing stability of the solid rocket motor of claim 1, the method comprising:
gradually increasing an environment temperature around the solid rocket motor of claim 1; and
measuring at least one of i) the environment temperature at which the solid rocket motor burns, explodes, or detonates or ii) a time period at which the solid rocket motor burns, explodes, or detonates from the gradual increasing of the environment temperature.

7. The method as recited in claim 6, wherein the salt compound is selected from the group consisting of metal salts, and combinations thereof.

## Patentansprüche

1. Feststoffraketenmotor, der einen Festtreibstoff umfasst, wobei der Festtreibstoff umfasst:
einen Brennstoff;
ein Bindemittel;
ein Perchlorat-Oxidationsmittel, das durch Wärme in gasförmige Perchloratzersetzungsprodukte zersetzbar ist; und
eine Salzverbindung, die mit einem oder mehreren der gasförmigen Perchloratzersetzungsprodukte reaktiv ist; wobei
der Brennstoff mindestens eines von Aluminium, Magnesium oder borbasierten Salzen beinhaltet;
das Bindemittel Hydroxyl-endständiges Polybutadien ist;
das Perchlorat-Oxidationsmittel mindestens eines von Ammoniumperchlorat, Natriumperchlorat und Kaliumperchlorat beinhaltet;
die Salzverbindung mindestens eines beinhaltet von:
a) einem Metallsalz, wobei das Metall Kobalt ist; oder
b) einem borbasierten Salz, das ein Borat, ein Borit, ein Perborat oder eine Kombination davon beinhaltet; und
die Salzverbindung 0,1% bis 20% eines kombinierten Gesamtgewichts des Brennstoffs, des Bindemittels, des Perchlorat-Oxidationsmittels und der Salzverbindung ist.

2. Feststoffraketenmotor nach Anspruch 1, wobei die Salzverbindung ein Metallsalz ist.

3. Feststoffraketenmotor nach Anspruch 1, wobei die Salzverbindung ein borbasiertes Salz ist.

4. Feststoffraketenmotor nach Anspruch 1, wobei die Salzverbindung 1% bis 10% des kombinierten Gesamtgewichts ist.

5. Feststoffraketenmotor nach Anspruch 1, wobei die Salzverbindung 1% bis 5% des kombinierten Gesamtgewichts ist.

6. Verfahren zum Testen von Stabilität des Feststoffraketenmotors nach Anspruch 1, wobei das Verfahren umfasst:
schrittweises Erhöhen einer Umgebungstemperatur um den Feststoffraketenmotor nach Anspruch 1; und
Messen mindestens eines von i) der Umgebungstemperatur, bei der der Feststoffraketenmotor brennt, explodiert oder detoniert oder ii) einer Zeitdauer, bei der der Feststoffraketenmotor ab der schrittweisen Erhöhung der Umgebungstemperatur brennt, explodiert oder detoniert.

7. Verfahren nach Anspruch 6, wobei die Salzverbindung aus der Gruppe ausgewählt ist, bestehend aus Metallsalzen und Kombinationen davon.

## Revendications

1. Moteur-fusée à poudre comprenant un propergol solide, dans lequel le propergol solide comprend :
un combustible ;
un liant ;
un oxydant perchlorate qui est décomposable thermiquement en produits de décomposition de perchlorate gazeux ; et
un composé de sel qui est réactif avec un ou plusieurs des produits de décomposition de perchlorate gazeux ; dans lequel
le combustible inclut au moins un parmi l'aluminium, le magnésium ou des sels à base de bore ;
le liant est du polybutadiène à terminaison hydroxyle ;
l'oxydant perchlorate inclut au moins un parmi le perchlorate d'ammonium, le perchlorate de sodium et le perchlorate de potassium ;
le composé de sel inclut au moins un parmi :
a) un sel de métal dans lequel le métal est le cobalt ; ou
b) un sel à base de bore qui inclut un borate, un borite, un perborate ou une combinaison de ceux-ci ; et
le composé de sel est de 0,1 % à 20 % d'un poids combiné total du combustible, du liant, de l'oxydant perchlorate et du composé de sel.

2. Moteur-fusée à poudre selon la revendication 1, dans lequel le composé de sel est un sel de métal.

3. Moteur-fusée à poudre selon la revendication 1, dans lequel le composé de sel est un sel à base de bore.

4. Moteur-fusée à poudre selon la revendication 1, dans lequel le composé de sel est de 1 % à 10 % du poids combiné total.

5. Moteur-fusée à poudre selon la revendication 1, dans lequel le composé de sel est de 1 % à 5 % du poids combiné total.

6. Procédé pour tester la stabilité du moteur-fusée à poudre selon la revendication 1, le procédé comprenant :
une augmentation progressive d'une température ambiante autour du moteur-fusée à poudre selon la revendication 1 ; et
une mesure d'au moins une parmi i) la température ambiante à laquelle le moteur-fusée à poudre brûle, explose ou détone ou ii) une période de temps pendant laquelle le moteur-fusée à poudre brûle, explose ou détone à partir de l'augmentation progressive de la température ambiante.

7. Procédé selon la revendication 6, dans lequel le composé de sel est sélectionné à partir du groupe consistant en des sels de métal et des combinaisons de ceux-ci.
